# EUROPÄISCHE PATENTSCHRIFT

(11) **EP 1 175 362 B1**
(45) Veröffentlichungstag und Bekanntmachung des Hinweises auf die Patenterteilung: **23.08.2006**
(21) Anmeldenummer: 00927152.9
(22) Anmeldetag: 05.05.2000
(51) Int. Cl.: B65G 54/02

(54) **TRANSPORTSYSTEM**
TRANSPORT SYSTEM
SYSTEME DE TRANSPORT

(30) Priorität: 06.05.1999 DE 29908093 U
(43) Veröffentlichungstag der Anmeldung: 30.01.2002
(73) Patentinhaber: Cooper Power Tools GmbH & Co., 73461 Westhausen (DE)
(72) Erfinder: MAYER, Otto, D-73466 Lauchheim (DE); WOHLFAHRTH, Klaus, D-74589 Satteldorf (DE)
(74) Vertreter: Grünecker, Kinkeldey, Stockmair & Schwanhäusser Anwaltssozietät
(86) Internationale Anmeldenummer: PCT/EP2000/004065
(87) Internationale Veröffentlichungsnummer: WO 2000/068124

(56) Entgegenhaltungen:
- DE-A- 19 743 882
- DE-A- 19 842 384
- US-A- 4 849 664
- MCLEAN G W: "REVIEW OF RECENT PROGRESS IN LINEAR MOTORS" IEE PROCEEDINGS B. ELECTRICAL POWER APPLICATIONS,GB,INSTITUTION OF ELECTRICAL ENGINEERS. STEVENAGE, Bd. 135, Nr. 6, PART B, 1. November 1988 (1988-11-01), Seiten 380-416, XP000051490

## Beschreibung

Die Erfindung betrifft ein Transportsystem mit den Merkmalen des Oberbegriffs des Patentanspruchs 1. Ein solches Transportsystem ist aus der US-A-4 849 664 bekannt.

Ein weiteres Transportsystem ist aus der DE 44 13 625 A1 bekannt. Bei diesem vorbekannten Transportsystem bewegt sich eine Schlitteneinrichtung als Produktträger mittels der Linearmotorantriebseinrichtung entlang einer ersten Laufbahn und ist insgesamt mit dieser entlang einer zweiten Laufbahn verstellbar.

Das vorbekannte Transportsystem dient zum Aufnehmen und Ablegen eines bestimmten Produktes oder Werkstückes mittels einer Greifeinrichtung. Die Schlitteneinrichtung ist begrenzt entlang der ersten Laufbahn zwischen zwei festen Punkten bewegbar und die Schlitteneinrichtung insgesamt mit der ersten Laufbahn entlang der zweiten Laufbahn zwischen zwei weiteren Punkten bewegbar, so dass insgesamt das von der Greifeinrichtung gehaltene Gut entlang aller drei Koordinatenachsen entlang von räumlichen Bahnkurven bewegt werden kann.

Nachteilig bei dem vorbekannten Transportsystem ist, dass nur spezielle Waren, Güter, Werkstücke oder Produkte aufgrund der Greifeinrichtung transportiert werden können und nur ein Produktträger durch äußere Beeinflussung über das Primärteil der Linearmotorantriebseinrichtung bewegt werden kann.

Ein ähnlich aufgebautes Transportsystem wird in der DE-U-298 16 285 desselben Anmelders beschrieben, wobei bei diesem Transportsystem das Sekundärteil am Produktträger und das Primärteil an der Laufbahn angeordnet ist.

Dem Anmeldungsgegenstand liegt daher die Aufgabe zugrunde, das eingangs beschriebene Transportsystem dahingehend zu verbessern, dass im Wesentlichen eine beliebige Anzahl von Produktträgem unabhängig voneinander entlang der Laufbahn bewegt werden können und vielseitig zum Transport unterschiedlichster Produkte oder Werkstücke eingesetzt werden können.

Diese Aufgabe wird durch die Merkmale des Anspruchs 1 gelöst.

Gegenüber dem erstgenannten Stand der Technik ergibt sich, dass erfindungsgemäß das Primärteil an einem mit der Grundplatte koppelbaren Fahrzeug angeordnet ist Um die Grundplatte für eine längere Zeit einer Arbeitsstation zuordnen zu können, wird im Wesentlichen nur die Grundplatte an dieser Arbeitsstation zurückgelassen, während die der Grundplatte zugeordnete Antriebseinrichtung des Produktträgers beispielsweise für weitere Grundplatten eingesetzt wird. Je nach Bedarf wird das Fahrzeug mit der Grundplatte gekoppelt oder von dieser entkoppelt. Mit einem Fahrzeug können mehrere Grundplatten bewegt werden, so dass insgesamt die Kosten des erfindungsgemäßen Transportsystems geringer werden. Dadurch kann jeder Produktträger separat beschleunigt oder verzögert werden, so dass beispielsweise bei Staustrecken eine Pufferung der Produktträger untereinander nicht notwendig ist. Es ergibt sich eine individuelle und konfliktfreie Steuerung der verschiedenen Produktträger und auf Stopper und/oder Stoßdämpfer an den Produktträgem kann verzichtet werden. Darüber hinaus sind weniger Produktträger notwendig, da nur so viele benötigt werden, wie Arbeitsaufträge entlang der Laufbahn und der dort befindlidhen Arbeitsstationen ausgeführt werden müssen. Im Vergleich zu dem Transportsystem nach DE-U-298 16 285 kann von einer Reduktion der Anzahl der für eine Fertigung benötigten Produktträger auf die Hälfte ausgegangen werden.

Durch die separate Steuerung der verschiedenen Produktträger können diese besser beschleunigt und verzögert werden, wodurch sich eine Verkürzung der Ein-/Auslauf-Taktzeiten ergibt und Produktionsstillstandszeiten durch variable Geschwindigkeiten der Produktträger aufgeholt werden können.

Aufgrund der individuellen Steuerung eines jeden Produktträgers sind diese vor einem Aufpuffern, d.h. vor einem Zusammenstoß mit anderen Produktträgem gesichert, so dass keine Quetsch- und Scherstellen am Produktträger auftreten. Diese könnten sich ansonsten durch den Zusammenstoß zweier hintereinander angeordneter Produktträger oder durch Verklemmen eines Produktträges in seiner Laufbahn durch Aufpuffern beispielsweise eines nachfolgenden Produktträgers ergeben.

In diesem Zusammenhang erweist es sich weiterhin als Vorteil, wenn jedem Produktträger bzw. dessen grundplatte eine Identifizierung zuordbar ist, so dass mittels eines beliebigen Fahrzeugs die entsprechende Grundplatte zum Gebrauch oder nach Gebrauch forttransportiert werden kann. Es ist ebenfalls möglich, dass bestimmte Abschnitte des Transportsystems mit nur einem Fahrzeug betrieben werden, das allen entlang dieses Transportabschnitts bewegbaren Grundplatten zugeordnet ist.

Die Linearmotorantriebseinrichtung kann als A- oder Synchronmotor ausgebildet sein. Bevorzugt wird ein Asynchronmotor eingesetzt.

Da das Primärteil dem Produktträger bzw. der Grundplatte zugeordnet ist, muss eine entsprechende Spannungs- bzw. Stromversorgung vorhanden sein. Bei einem Ausführungsbeispiel ist die Spannungsversorgungseinrichtung als wiederaufladbare Batterie, Akkumulator oder dergleichen ausgebildet. Diese ist im oder am Produktträger und insbesondere im oder an der Grundplatte des Produktträgers angeordnet. Bei einer solchen wiederaufladbaren Spannungsversorgungseinrichtung kann die Aufladung beispielsweise an einer separaten Ladestation entlang des Transportsystems oder auch an einer von dem Produktträger anfahrbaren Arbeitsstation oder dergleichen erfolgen. Die Aufladung kann automatisch oder auch manuell gesteuert erfolgen.

Die Laufbahn des erfindungsgemäßen Transportsystems kann in unterschiedlicher Weise realisiert werden. In der DE-U-298 16 285 desselben Anmelders werden beispielsweise horizontal und vertikal angeordnete Laufbahnen beschrieben mit entsprechenden Führungen für die Produktträger. Die Grundplatten sind entsprechend horizontal bzw. vertikal ausgerichtet. Auch bei dem erfindungsgemäßen Transportsystem sind solche horizontalen und vertikalen Anordnungen mit der entsprechenden Halterung und Führung nach DE-U-298 16 285 einsetzbar.

Bei dem beschriebenen Ausführungsbeispiel des erfindungsgemäßen Transportsystems sind die Laufbahnen durch ein von einer Vielzahl von im Wesentlichen vertikal auf einem Untergrund aufgestellten Tragprofilen in Abstand zueinander gehaltenes Laufschienen-Paar gebildet. Statt der Tragprofile können auch Ständer in ähnlicher Weise und von ähnlichem Aufbau wie in der DE-U-298 16 285 beschrieben verwendet werden.

Um den Freiraum zwischen den Tragprofilen zu überbrücken, kann ein Abdeckprofil zwischen ihnen angeordnet sein. Dies kann sich entlang der Laufbahnen im gesamten Transportsystem erstrecken.

Da das Abdeckprofil im Wesentlichen der Unterseite der Grundplatte bzw. des Produktträgers zuweist, kann das oder können die Sekundärteile am Abdeckprofil entlang der Laufbahn angeordnet sein. Als Sekundärteile werden bei Synchronmotoren Magnete und insbesondere Profil-Magnete eingesetzt, die analog zum Primärteil auf dem Abdeckprofil oder zumindest teilweise versenkt in diesem angeordnet sein können, und bei Asynchronmotoren vorzugsweise Kupferschienen mit Stahlrücken.

Um den Produktträger entlang der Laufbahn sicher bewegen zu können, kann die Grundplatte entlang ihrer Längskanten und/oder auf ihrer Unterseite benachbart zu ihren Längskanten entlang der Laufbahn geführt sein.

Für eine solche Führung sind verschiedene Realisierungen möglich. Beispielsweise können zwischen Grundplatte und Laufbahn Roll-, Kugel-, Führungselemente, reibungsvermindemde Führungseinrichtungen oder dergleichen angeordnet sein. Diese Elemente bzw. Einrichtungen können beabstandet zueinander oder auch kontinuierlich im Fall von schienenförmigen Führungselementen oder -einrichtungen angeordnet. Die entsprechenden Elemente bzw. Einrichtungen können an der Laufbahn beziehungsweise den Laufschienen und/oder an der Grundplatte vorgesehen sein.

Da die Produktträger gemäß erfindungsgemäßem Transportsystem individuell steuerbar sind, ist eine Positionsüberwachung vorteilhaft. Diese ist dadurch realisierbar, dass zwischen Produktträger und Laufbahn eine Positionsbestimmungseinrichtung angeordnet ist. Diese kann durch beispielsweise einen Maßstab und ein Maßstabablesesystem gebildet sein. Der Maßstab kann am Produktträger oder am Abdeckprofil oder an den Laufbahnen und entsprechend das Maßstabablesesystem am jeweils anderen Teil angeordnet sein. Bevorzugt ist das Maßstabablesesystem am bewegten Produktträger angeordnet, um durch den Produktträger selbst seine jeweilige Position feststellen zu können.

Durch die genaue Positionsbestimmung für jeden Produktträger entfällt beispielsweise auch eine Indexiereinrichtung an jeder Arbeitsstation entlang der Laufbahn, da jeder Produktträger relativ zum Maßstab genau positioniert werden kann. In diesem Zusammenhang kann es weiterhin als vorteilhaft angesehen werden, wenn der Produktträger eine bordeigene Elektronik aufweist, die insbesondere von der Spannungsversorgungseinrichtung versorgt wird und mit einer Zentralstation zum Austausch von Daten und/oder Anweisungen in Verbindung steht. Auf diese Weise werden Informationen zwischen dem Produktträger und der Zentralstation ausgetauscht. Diese Informationen können beispielsweise zur Positionsbestimmung der einzelnen Produktträger, zu deren Beschleunigung oder Verzögerung, zu deren Identifizierung, zur elektrischen Kodierung eines Arbeitsauftrags oder dergleichen übermittelt werden. Die Informationen können mittels eines Bussystems zwischen Produktträger und beispielsweise Abdeckprofil übertragen werden. In vorteilhafter Weise ist ein solches Bussystem in der Lichtwellenreiter-Technik ausgeführt. Die Informationen sind auch über Funk oder in anderer Weise übertragbar.

Um auch direkt an den Arbeitsstationen oder während der Bewegung der Produktträger Informationen von diesen entnehmen zu können oder Informationen einzugeben, kann der Produktträger eine Anzeige- und/oder Abfrage- und/oder Eingabeeinrichtung aufweisen. Auf diese Weise sind beispielsweise über die Anzeigeeinrichtung Informationen direkt am Produktträger anzeigbar. Ebenso kann über eine Eingabeeinrichtung eine Fahrfreigabe des Produktträgers eingegeben werden, die an die Zentralstation übermittelbar ist. Direkt nach der Fahrfreigabe kann der Produktträger weiter bewegt werden, wodurch sich insgesamt eine absolut freie Bandaustaktung für das gesamte Transportsystem ergibt.

Über die Anzeigeeinrichtung können auch Informationen für die Arbeiter an die verschiedenen Arbeitsstationen übermittelt werden oder weitere Informationen können über eine entsprechende Abfrageeinrichtung über den Produktträger von der Zentralstation abgerufen werden.

Um nicht nur die Position der Grundplatte zu kennen, ist es in diesem Zusammenhang als günstig zu betrachten, wenn eine entsprechende Positionsbestimmungseinrichtung sowohl der Grundplatte als auch dem Fahrzeug zugeordnet ist.

In das Fahrzeug unabhängig von der Grundplatte und diese gegebenenfalls auch unabhängig vom jeweiligen Fahrzeug bewegen zu können, kann das Fahrzeug entlang einer separaten, insbesondere unterhalb der Grundplatte verlaufenden Fahrzeuglaufbahn bewegbar sein.

Im einfachsten Fall kann diese Fahrzeuglaufbahn am Abdeckprofil ausgebildet sein.

Da das Fahrzeug entlang der Fahrzeuglaufbahn auch ohne angekoppelte Grundplatte bewegbar sein soll, kann die oder eine weitere Spannungsversorgungseinrichtung im oder am Fahrzeug angeordnet sein.

Bei einem Ausführungsbeispiel des erfindungsgemäßen Transportsystems kann die Fahrzeuglaufbahn in einer im wesentlichen U-förmigen, nach oben in Richtung Grundplatte offenen Laufbahnvertiefung im Abdeckprofil ausgebildet ist. In dieser Vertiefung läuft das Fahrzeug unbehindert und unabhängig von den Grundplatten.

Eine einfache Kopplungsmöglichkeit zwischen Fahrzeug und Grundplatte kann beispielsweise dadurch realisiert werden, dass zwischen Fahrzeug und Grundplatte eine lösbare Kopplungseinrichtung angeordnet ist. Diese kann beispielsweise einem Hubmagneten aufweisen, der beim Ankoppeln der Grundplatte vom Fahrzeug nach oben in eine entsprechende Öffnung in der Unterseite der Grundplatte einschiebbar ist. Zum Entkoppeln wird der Hubmagnet zurückgezogen.

Weitere Kopplungseinrichtungen sind aus der Praxis bekannt und können auch entsprechend bei dem erfindungsgemäßen Transportsystem eingesetzt werden. Es ist auch möglich, beispielsweise Fahrzeug und Grundplatte manuell zu entkoppeln, falls die Grundplatte eine gewünschte Position erreicht hat. Dabei kann die Anordnung des Produktträgers in der erwünschten Position beispielsweise über die Eingabeeinrichtung zur Feinpositionierung erfolgen und anschließend mittels dieser Einrichtung auch die Entkopplung vom Fahrzeug erfolgen. Es ist ebenfalls möglich, dass bei Erreichen einer gewünschten Zielposition die Grundplatte automatisch durch einen mechanischen Anschlag oder dergleichen vom Fahrzeug entkoppelt wird.

Um ein Eingreifen in den Bewegungsweg des Fahrzeugs für Arbeiter entlang des Transportsystems möglichst zu verhindern und damit eine Verletzungsgefahr zu vermindern, kann die Laufbahnvertiefung durch eine Abdeckung abgedeckt sein, in der ein sich in Bewegungsrichtung des Fahrzeugs erstreckender Schlitz zum Durchgriff der Kopplungseinrichtung ausgebildet ist. Durch diesen relativ schmalen Schlitz wird auch verhindert, dass Teile auf die Fahrzeuglaufbahn fallen und dadurch eine weitere Bewegung des Fahrzeugs verhindern oder dieses gar beschädigen.

Um bei dem erfindungsgemäßen Transportsystem die auf dem Produktträger aufgeladenen Produkte entsprechend zur Verwendung ausrichten zu können, kann ein verstellbarer Drehteller auf der Grundplatte drehbar gelagert sein. Der Drehteller kann nur einen Teil der Grundplatte abdecken, kann aber auch genauso groß oder sogar größer in seinen Abmessungen als die Grundplatte sein.

Um den Drehteller relativ zur Grundplatte einfach verdrehen zu können, kann eine Lineardrehantriebseinrichtung zwischen Drehteller und Grundplatte ausgebildet sein. Diese kann wie die Antriebseinrichtung für Fahrzeug bzw. Produktträger ebenfalls über die obenbeschriebene Spannungsversorgungseinrichtung versorgt werden.

Um eine Weiterbewegung insbesondere der vom Fahrzeug entkoppelten Grundplatten zu verhindern, kann an den Laufbahnen, an der Abdeckeinrichtung oder an den Grundplatten eine Bremseinrichtung angeordnet sein. Diese dient insbesondere zur Festlegung der Grundplatte im Bereich von Arbeitsstationen entlang der Laufbahn. Die Bremseinrichtung kann wiederum manuell oder automatisch betätigt werden.

Da das Fahrzeug in beide Richtungen entlang der Laufbahnen bewegbar ist, kann es sich insbesondere bei mehreren Fahrzeugen entlang eines Transportabschnitts als vorteilhaft erweisen, wenn die Fahrzeuglaufbahn wenigstens einen Rückführabschnitt zur Rückführung der von der Grundplatte entkoppelten Fahrzeugen an eine Rückführungsstelle aufweist. Auf diese Weise kann ein Fahrzeug an einem anderen Fahrzeug ohne Behinderung vorbeigeführt werden.

Bei dem erfindungsgemäßen Transportsystem ergibt sich durch die separate Ansteuerung der verschiedenen Produktträger, dass diese besser beschleunigt und verzögert werden können, wodurch sich die Taktzeit pro Arbeitsstation verringert. Die Produktträger können auch rückwärtsfahren, um z.B. einen Arbeitsauftrag bei mangelnder Ausführung zu wiederholen. Weiterhin können entlang einer Fertigungsstraße verschiedene, teilweise parallele Fertigungs- bzw. Transportwege konzipiert werden. Es ist eine nahezu beliebige Linienführung ohne Eck-Drehstationen zur Änderung der Bewegungsrichtung der Produktträger möglich. Schließlich sei noch angemerkt, dass bei dem erfindungsgemäßen Transportsystem eine einfache Höhenanpassung möglich ist, so dass bei der Fertigung auch Berg- und Talfahrten möglich sind.

Bei einem weiteren Ausführungsbeispiel des erfindungsgemäßen Transportsystems kann auf dem Werkstück- oder Produktträger ein Dreh- oder Verschiebeteller angeordnet sein, der relativ zum Träger bewegbar ist. Dieser Teller kann dazu dienen, insbesondere auch während des Transportes eines Werkstücks dessen Position relativ zum Träger zu verändern. Der Dreh-/Verschiebeteller kann außerdem über eine Greif- oder Spanneinrichtung zum Halten des Werkstücks oder Produkts verfügen oder es kann auf dem Teller eine Aufnahme zur Halterung des Werkstücks angeordnet sein.

Im Folgenden wird ein vorteilhaftes Ausführungsbeispiel der Erfindung anhand der beigefügten Figuren näher erläutert.

Es zeigen:
- Fig. 1: einen Schnitt entlang der Linie I-I durch ein Transportsystem nach Fig. 3 ohne koppelbares Fahrzeug ;
- Fig. 2: einen Fig. 1 entsprechenden Schnitt durch ein erfindungsgemäßes Ausführungsbeispiel und
- Fig. 3: eine Draufsicht auf einen Transportabschnitt eines prinzipiell dargestellten, erfindungsgemäßen Transportsystems.

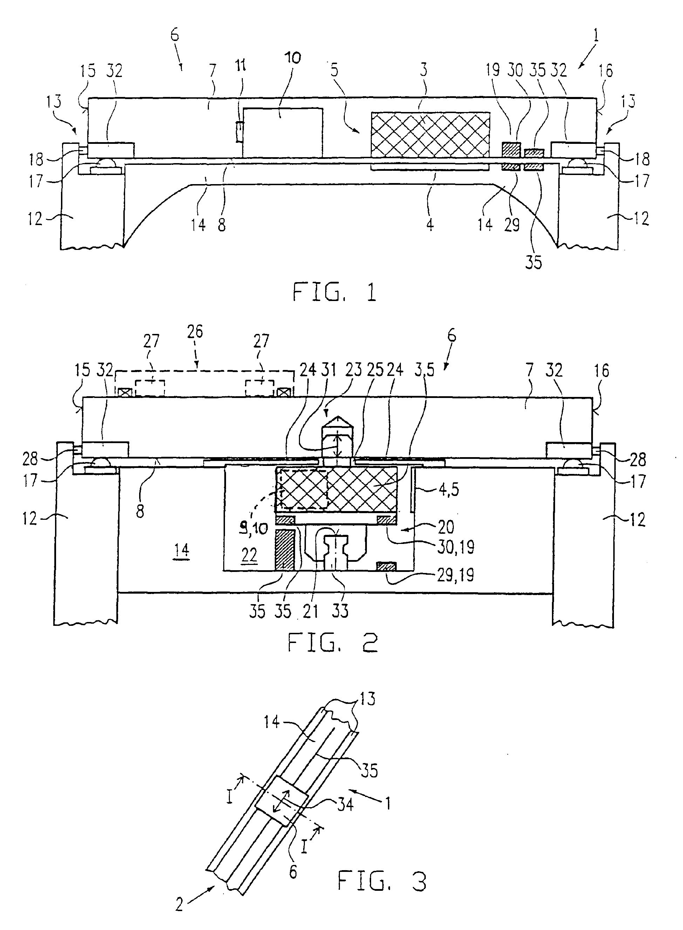

In Fig. 3 ist erkennbar, dass das Transportsystem 1 eine Laufbahn 2 aufweist, die sich beispielsweise entlang einer Fertigungsstraße zum Transport von Werkstücken, Produkten oder anderen Gegenständen mittels eines Produktträgers 6 erstreckt. Der Produktträger 6 weist eine im wesentlichen ebene Oberfläche auf, auf die der entsprechende Gegenstand aufstellbar und in Richtungen 34 entlang der Laufbahn 2 transportierbar ist. Der Produktträger 6 ist entlang seiner Längsseiten durch die Laufbahn 2 bestimmende Laufschienen 13 geführt, zwischen denen sich ein Abdeckprofil 14 erstreckt.

In Fig. 1 ist ein Schnitt entlang der Linie I-I aus Fig. 3 dargestellt In dieser wie in der folgenden Figur sind gleiche Teile durch gleiche Bezugszeichen bezeichnet und werden nur jeweils teilweise erwähnt.

Der Produktträger 6 ist im wesentlichen durch eine Grundplatte 7 gebildet, die horizontale Ober- und Unterseiten aufweist. Auf der Oberseite der Grundplatte 7 kann ein Produkt, Werkstück oder sonstiger Gegenstand aufgestellt werden.

Entlang von Seitenkanten 15, 16 der Grundplatte 7 und in Bereichen der Unterseite 8 benachbart zu den Seitenkanten ist die Grundplatte 7 durch Roll- und Führungselemente 17, 18 entlang der Laufschienen 13 geführt Diese weisen einen im wesentlichen L-förmigen Querschnitt auf, wobei jedem L-Schenkel ein Roll- bzw. Fühnrngselement 17, 18 zugeordnet ist. Im Bereich der Seitenkanten 15, 16 bzw. Unterseite 8 weist die Grundplatte 7 Laufleisten 32 auf, an denen die entsprechenden Elemente 17, 18 anliegen.

In der Grundplatte 7 ist als Teil einer Linearmotorantriebseinrichtung 5 ein Primärteil 3 angeordnet. Diesem liegt ein in einem zwischen im wesentlichen vertikalen Tragprofilen 12 sich erstreckenden Abdeckprofil 14 angeordnetes Sekundärteil 4 der Linearmotorantriebseinrichtung 5 gegenüber. Das Sekundärteil 4 ist beispielsweise durch Profil-Magnete bei Synchronmotoren und durch Kupferschienen mit Stahlplatten bei Asynchronmotoren entlang der Laufbahn 2, siehe Fig. 3, gebildet.

Zur Stromversorgung des Primärteils 3 ist als Spannungsversorgungseinrichtung 9 eine wiederaufladbare Batterie 10 beziehungsweise Akkumulator vorgesehen. Ein solcher Akkumulator ist bei dem dargestellten Ausführungsbeispiel in der Grundplatte 7 versenkt angeordnet. Zum Aufladen des Akkumulators sind entsprechende Anschlüsse 11, wie beispielsweise Steckkontakte oder dergleichen vorgesehen.

Zur Positionsbestimmung des Produkttragers 6 ist eine Positionsbestimmungseinrichtung 19 vorgesehen, die eine Maßstabseinrichtung 29 und eine Maßstabsableseeinrichtung 30 aufweist Die Maßstabseinrichtung 29 ist auf einer der Unterseite 8 der Grundplatte 7 gegenüberliegenden Oberseite des Abdeckprofils 14 angeordnet und verläuft parallel zu den Laufschienen 13. An der Unterseite 8 der Grundplatte 7 ist die Maßstababieseeinrichtung 30 gegenüberliegend zur Maßstabseinrichtung 29 angeordnet. Neben der Positionsbestimmungseinrichtung 19 ist ein Bussystem aus Busleitungen 35 angeordnet, die beispielsweise in Lichtweltenleitertechnik ausgeführt sind.

In Fig. 2 ist ein Schnitt analog zu Fig. 1 durch ein erfindungsgemäßes Ausführungsbeispiel dargestellt.

Dieses unterscheidet sich vom Transportsystem 1 nach Fig.1 durch ein mit der Grundplatte 7 koppelbares Fahrzeug 20. Weiterhin ist in Fig. 2 auf der Oberseite der Grundplatte 7 ein Drehteller 26 gestrichelt dargestellt, der relativ zur Grundplatte 7 auf dieser drehbar gelagert ist. Als Drehantrieb weist der Drehteller 26 eine Lineardrehantriebseinrichtung 27 auf.

In dem Abdeckprofil 14 ist eine U-förmige Laufbahnvertiefung 22 zur Aufnahme des Fahrzeugs 20 angeordnet. In dieser ist das Fahrzeug 20 nahezu vollständig aufgenommen. Auf einer der Grundplatte 7 gegenüberliegenden Unterseite des Fahrzeugs ist dieses entlang einer Schiene 33 mit Fahrzeuglaufbahn 21 bewegbar. Das Primärteil 3 als Teil der Linearmotorantriebseinrichtung 5 ist im Fahrzeug 20 integriert. Das entsprechende Sekundärteil 4 befindet sich innerhalb der Laufbahnvertiefung 22 im geringen Abstand zum Primärteil 3. Analog zur Figur 1 kann die entsprechende Spannungsversorgungseinrichtung 9 in Form eines Akkumulators 10 im oder am Fahrzeug 20 angeordnet sein. Entsprechende Anschlüsse 11 zum wiederaufladen des Akkumulators sind zur Vereinfachung weggelassen worden.

Zur Positionsbestimmung des Fahrzeugs ist eine entsprechende Positionsbestimmungseinrichtung 19 zwischen Fahrzeug 20 und Laufbahnvertiefung 22 vorgesehen. Diese kann sich wie die bereits in Fig. 1 beschriebene Positionsbestimmungseinrichtung 19 aus einer Maßstabseinrichtung 29 und einer Maßstabsableseeinrichtung 30 zusammensetzen. Es kann ebenfalls ein Bussystem 35 vorgesehen sein.

Eine entsprechende Positionsbestimmungseinrichtung 19 für die Grundplatte 7 selbst ist in Fig. 2 zur Vereinfachung nicht dargestellt.

Zur Abdeckung der Laufbahnvertiefung 22 ist eine Abdeckung 24 zwischen Abdeckprofil 14 und Unterseite 8 der Grundplatte 7 angeordnet, wobei diese Abdeckung 4 oben auf dem Abdeckprofil 14 aufliegt und beispielsweise an diesem lösbar befestigt ist.

Die Abdeckung 24 weist oberhalb des Fahrzeugs 20 einen Schlitz 25 auf, der sich in Bewegungsrichtung des Fahrzeugs 20 erstreckt. Durch diesen ist die Kopplungseinrichtung 23 in Richtung Grundplatte 7 hindurchgeführt.

Bei dem dargestellten Ausführungsbeispiel ist die Kopplungseinrichtung 23 durch einen automatisch in Richtungen 31 anheb- und absenkbaren Hubmagneten gebildet. Dieser ist vom Fahrzeug 20 in eine Vertiefung in der Unterseite 8 der Grundplatte 7 einschieb- bzw. aus dieser Vertiefung herausziehbar.

Es sei nochmals darauf hingewiesen, dass bei dem erfindungsgemäßen Transportsystem eine vertikale Führung der Produktträger 6 möglich ist, wie sie beispielsweise in der DE-U-29816285 desselben Anmelders beschrieben ist. Zur Anpassung des hier beschriebenen Transportsystems an eine solche vertikale Führung sind die in dem vorangehend genannten Gebrauchsmuster beschriebenen Merkmale entsprechend übertragbar.

## Patentansprüche

1. Transportsystem (1) mit zumindest einem entlang einer Laufbahn (2) mittels einer Primärteil (3) und Sekundärteil (4) aufweisenden Linearmotorantriebseinrichtung (5) bewegbaren Produktträger (6), welcher eine im wesentlichen ebene Grundplatte (7) zum Transport von Gegenständen aufweist, wobei der Laufbahn (2) der Sekundärteil (4) zugeordnet ist,
**dadurch gekennzeichnet, dass**
der Primärteil (3) an einem mit der Grundplatte (7) koppelbaren Fahrzeug (20) angeordnet ist.

2. Transportsystem nach Anspruch 1, **dadurch gekennzeichnet, dass** die Linearmotorantriebseinrichtung (5) ein Synchron- oder Asynchronmotor ist.

3. Transportsystem nach Anspruch 1 oder 2, **dadurch gekennzeichnet, dass** eine Spannungsversorgungseinrichtung (9), insbesondere ein Akkumulator oder dergleichen, vom Produktträger (6) mitführbar ist.

4. Transportsystem nach Anspruch 3, **dadurch gekennzeichnet, dass** die Spannungsversorgungseinrichtung (9,10) in der Grundplatte (7) angeordnet ist.

5. Transportsystem nach Anspruch 3, **dadurch gekennzeichnet, dass** die Laufbahn (2) durch ein von einer Vielzahl von im wesentlichen vertikal auf einem Untergrund aufgestellten Tragprofilen (12) im Abstand zueinander gehaltenes Laufschienen-Paar (13) gebildet ist.

6. Transportsystem nach Anspruch 5, **dadurch gekennzeichnet, dass** ein Abdeckprofil (14) zwischen den Tragprofilen (12) angeordnet ist.

7. Transportsystem nach Anspruch 6, **dadurch gekennzeichnet, dass** das oder die Sekundärteile (4) am Abdeckprofil (14) entlang der Laufbahn (2) angeordnet sind.

8. Transportsystem nach einem der vorangehenden Ansprüche 5 bis 7, **dadurch gekennzeichnet, dass** die Grundplatte (7) entlang ihrer Längskanten (15, 16) und/oder auf ihrer Unterseite (8) benachbart zu ihren Längskanten (15, 16) entlang der Laufschienen (13) geführt ist.

9. Transportsystem nach einem der vorangehenden Ansprüche, **dadurch gekennzeichnet, dass** zur Führung der Grundplatte (7) zwischen dieser und der Laufbahn (2) Roll-, Kugel-, Führungselemente, reibungsvermindernde Einrichtungen oder dergleichen angeordnet sind.

10. Transportsystem nach einem der vorangehenden Ansprüche, **dadurch gekennzeichnet, dass** zwischen Produktträger (6) und Laufbahn (2) eine Positionsbestimmungseinrichtung (19) angeordnet ist.

11. Transportsystem nach einem der vorangehenden Ansprüche, **dadurch gekennzeichnet, dass** der Produktträger (6) eine bordeigene Elektronik aufweist, die mit einer Zentralstation zum Austausch von Daten- und/oder Anweisungen in Verbindung ist.

12. Transportsystem nach einem der vorangehenden Ansprüche 6 bis 11, **dadurch gekennzeichnet, dass** am Produktträger (6) und gegenüberliegend insbesondere am Abdeckprofil (14) Busleitungen (35), wie Lichtwellenleiter oder dergleichen, zum Austausch von Daten- und/oder Anweisungen angeordnet sind.

13. Transportsystem nach einem der vorangehenden Ansprüche, **dadurch gekennzeichnet, dass** der Produktträger (6) eine Anzeige- und/oder Abfrage- und/oder Eingabeeinrichtung aufweist.

14. Transportsystem nach einem der vorangehenden Ansprüche, **dadurch gekennzeichnet, dass** das Fahrzeug (20) entlang einer separaten, insbesondere unterhalb der Grundplatte (7) verlaufenden Fahrzeuglaufbahn (21) bewegbar ist.

15. Transportsystem nach Ansprüchen 6 und 14, **dadurch gekennzeichnet, dass** die Fahrzeuglaufbahn (21) in dem Abdeckprofil (14) ausgebildet ist.

16. Transportsystem nach einem der vorangehenden Ansprüche 3 bis 15, **dadurch gekennzeichnet, dass** die Spannungsversorgungseinrichtung (9,10) im oder am Fahrzeug (20) angeordnet ist.

17. Transportsystem nach Anspruch 15, **dadurch gekennzeichnet, dass** die Fahrzeuglaufbahn (21) als eine im wesentlichen U-förmige, nach oben in Richtung Grundplatte (7) offene Laufbahnvertiefung (22) im Abdeckprofil (14) ausgebildet ist.

18. Transportsystem nach einem der vorangehenden Ansprüche, **dadurch gekennzeichnet, dass** zwischen Fahrzeug (20) und Grundplatte (7) eine lösbare Kopplungseinrichtung (23) angeordnet ist.

19. Transportsystem nach Anspruch 17, **dadurch gekennzeichnet, dass** die Laufbahnvertiefung (22) durch eine Abdeckung (24) abdeckbar ist, in der ein sich in Bewegungsrichtung des Fahrzeugs (20) erstreckender Schlitz (25) zum Durchgriff der Kopplungseinrichtung (23) ausgebildet ist.

20. Transportsystem nach einem der vorangehenden Ansprüche, **dadurch gekennzeichnet, dass** ein verstellbarer Drehteller (26) auf der Grundplatte (7) drehbar gelagert ist.

21. Transportsystem nach Anspruch 20, **dadurch gekennzeichnet, dass** eine Lineardrehantriebseinrichtung (27) zur Verdrehung des Drehtellers (26) zwischen diesem und der Grundplatte (7) ausgebildet ist.

22. Transportsystem nach einem der vorangehenden Ansprüche, **dadurch gekennzeichnet, dass** zumindest im Bereich von Arbeitsstationen entlang der Laufbahn (2) insbesondere an dieser eine Bremseinrichtung (28) für den Produktträger (6) angeordnet ist.

23. Transportsystem nach einem der vorangehenden Ansprüche 14,15,17 oder 19, **dadurch gekennzeichnet, dass** die Fahrzeuglaufbahn (21) wenigstens einen Rückführabschnitt zur Rückführung von von der Grundplatte (7) entkoppelten Fahrzeugen (20) an eine Rückführungsstelle aufweist.

## Claims

1. A transport system (1) including at least one product carrier (6) which is adapted to be moved along a slide way (2) by means of a linear motor drive unit (5) comprising a primary part (3) and a secondary part (4), which product carrier (6) is provided with a substantially flat base plate (7) for transporting objects, the slide way (2) having associated therewith the secondary part (4), **characterized in that** the primary part (3) is arranged at a vehicle (20) that can be coupled to the base plate (7).

2. The transport system according to claim 1, **characterized in that** the linear motor drive unit (5) is a synchronous motor or an asynchronous motor.

3. The transport system according to claim 1 or 2, **characterized in that** a voltage supply unit (9), especially an accumulator or the like, can be carried along by the product carrier (6).

4. The transport system according to claim 3, **characterized in that** the voltage supply unit (9,10) is arranged in the base plate (7).

5. The transport system according to claim 3, **characterized in that** the slide way (2) is formed by a pair of slide rails (13) held in spaced relationship with one another by a plurality of support sections (12) set up substantially vertically on a foundation.

6. The transport system according to claim 5, **characterized in that** a cover section (14) is arranged between the support sections (12).

7. The transport system according to claim 6, **characterized in that** the secondary part (4) or the secondary parts (4) are arranged on the cover section (14) along the slide way (2).

8. The transport system according to one of the claims 5 to 7, **characterized in that** the base plate (7) is guided along the slide rails (13) along its longitudinal edges (15,16) and/or on its lower surface (8) adjacent said longitudinal edges (15,16).

9. The transport system according to one of the preceding claims, **characterized in that**, for guiding the base plate (7), roller elements, spherical elements, guide elements, friction-reducing means or the like are arranged between said base plate (7) and the slide way (2).

10. The transport system according to one of the preceding claims, **characterized in that** a position determination unit (19) is arranged between the product carrier (6) and the slide way (2).

11. The transport system according to one of the preceding claims, **characterized in that** the product carrier (6) is provided with onboard electronics which communicate with a central station so as to exchange data and/or instructions.

12. The transport system according to one of the preceding claims, **characterized in that** bus lines (35), such as optical waveguides or the like, are arranged on the product carrier (6) and, in opposed relationship therewith, especially on the cover section (14) so as to exchange data and/or instructions.

13. The transport system according to one of the preceding claims, **characterized in that** the product carrier (6) is provided with display and/or interrogation and/or input means.

14. The transport system according to one of the preceding claims, **characterized in that** the vehicle (20) is adapted to be moved along a separate vehicle slide way (21) extending especially below the base plate (7).

15. The transport system according to one of the preceding claims, **characterized in that** the vehicle slide way (21) is formed in the cover section (14).

16. The transport system according to one of the preceding claims, **characterized in that** the voltage supply unit (9,10) is arranged in or on the vehicle (20).

17. The transport system according to claim 15, **characterized in that** the vehicle slide way (21) is implemented in the cover section (14) as a substantially U-shaped slide-way groove (22) which is open at the top in the direction of the base plate (7).

18. The transport system according to one of the preceding claims, **characterized in that** a releasable coupling means (23) is arranged between the vehicle (20) and the base plate (7).

19. The transport system according to one of the preceding claims, **characterized in that** the slide-way groove (22) is adapted to be covered by a cover (24) having formed therein a slot (25) which extends in the direction of movement of the vehicle (20) and which permits the coupling means (23) to extend therethrough.

20. The transport system according to one of the preceding claims, **characterized in that** an adjustable rotary plate (26) is rotatably supported on the base plate (7).

21. The transport system according to claim 20, **characterized in that** a linear rotary drive unit (27) used for rotating the rotary plate (26) is implemented between said rotary plate (26) and the base plate (7).

22. The transport system according to one of the preceding claims, **characterized in that,** at least in the area of work stations along the slide way (2), a brake means (28) for the product carrier (6) is arranged in particular on said slide way (2).

23. The transport system according to one of the claims 14, 15, 17, or 19, **characterized in that** the vehicle slide way (21) includes at least one return section for returning vehicles (20), which have been decoupled from the base plate (7), to a return location.

## Revendications

1. Système de transport (1) avec au moins un porte-produits (6) déplaçable le long d'une voie de roulement (2) au moyen d'un dispositif d'entraînement linéaire à moteur (5) comportant une partie primaire (3) et une partie secondaire (4), lequel porte-produits comporte une plaque de base (7) sensiblement plane pour le transport d'objets, la voie de roulement (2) étant associée à la partie secondaire (4), **caractérisé en ce que** la partie primaire (3) est disposée sur un véhicule (20) pouvant être couplé à la plaque de base (7).

2. Système de transport selon la revendication 1, **caractérisé en ce que** le dispositif d'entraînement linéaire à moteur 5 est un moteur synchrone ou un moteur asynchrone.

3. Système de transport selon la revendication 1 ou 2, **caractérisé en ce qu'**un dispositif d'alimentation en tension (9), en particulier un accumulateur ou similaire, peut être emporté par le porte-produits (6).

4. Système de transport selon la revendication 3, **caractérisé en ce que** le dispositif d'alimentation en tension (9, 10) est disposé dans la plaque de base (7).

5. Système de transport selon la revendication 3, **caractérisé en ce que** la voie de roulement (2) est formée par une paire de rails de roulement (13) maintenus à distance l'un de l'autre par un grand nombre de profilés portants (12) placés sensiblement verticalement sur un support.

6. Système de transport selon la revendication 5, **caractérisé en ce qu'**un profilé de recouvrement (14) est disposé entre les profilés portants (12).

7. Système de transport selon la revendication 6, **caractérisé en ce que** la ou les parties secondaires (4) sont disposées sur le profilé de recouvrement (14) le long de la voie de roulement (2).

8. Système de transport selon l'une des revendications 5 à 7 précédentes, **caractérisé en ce que** la plaque de base (7) est guidée le long de ses bords longitudinaux (15, 16) et/ou sur sa face inférieure (8) à proximité de ses bords longitudinaux (15, 16), le long des rails de roulement (13).

9. Système de transport selon l'une des revendications précédentes, **caractérisé en ce que** pour guider la plaque de base (7) entre celle-ci et la voie de roulement (2) il est disposé des éléments à rouleaux, à billes, des éléments de guidage, des dispositifs réduisant la friction ou similaires.

10. Système de transport selon l'une des revendications précédentes, **caractérisé en ce qu'**un dispositif de détermination de position (19) est disposé entre le porte-produits (6) et la voie de roulement (2).

11. Système de transport selon l'une des revendications précédentes, **caractérisé en ce que** le porte-produits (6) comporte une électronique de bord qui est en liaison avec un poste central pour l'échange de données et/ou d'instructions.

12. Système de transport selon l'une des revendications 6 à 11 précédentes, **caractérisé en ce que** sur le porte-produits (6) et en vis-à-vis, en particulier sur le profil de recouvrement (14), sont disposées des lignes de bus (35), telles que des guides d'ondes optiques ou similaires, pour l'échange de données et/ou d'instructions.

13. Système de transport selon l'une des revendications précédentes, **caractérisé en ce que** le porte-produits (6) comporte un dispositif d'affichage et/ou d'interrogation et/ou de saisie.

14. Système de transport selon l'une des revendications précédentes, **caractérisé en ce que** le véhicule (20) est déplaçable le long d'une voie de roulement de véhicule (21) séparée, s'étendant en particulier au-dessous de la plaque de base (7).

15. Système de transport selon les revendications 6 et 14, **caractérisé en ce que** la voie de roulement de véhicule (21) est réalisée dans le profilé de recouvrement (14).

16. Système de transport selon l'une des revendications 3 à 15 précédentes, **caractérisé en ce que** le dispositif d'alimentation en tension (9, 10) est disposé dans ou sur le véhicule (20).

17. Système de transport selon la revendication 15, **caractérisé en ce que** la voie de roulement de véhicule (21) est réalisée sous la forme d'un renfoncement de voie de roulement (21) sensiblement en U, ouvert vers le haut en direction de la plaque de base (7).

18. Système de transport selon l'une des revendications précédentes, **caractérisé en ce qu'**un dispositif d'accouplement (23) séparable est disposé entre le véhicule (20) et la plaque de base (7).

19. Système de transport selon la revendication 17, **caractérisé en ce que** le renfoncement de voie de roulement (22) peut être recouvert par un capot (24) dans lequel est réalisée une fente (25), s'étendant dans la direction de déplacement du véhicule (20), pour le passage du dispositif d'accouplement (23).

20. Système de transport selon l'une des revendications précédentes, **caractérisé en ce qu'**un plateau tournant (26) réglable est monté tournant sur la plaque de base (7).

21. Système de transport selon la revendication 20, **caractérisé en ce qu'**un dispositif d'entraînement en rotation linéaire (27) est réalisé pour la rotation du plateau tournant (26) entre celui-ci et la plaque de base (7) .

22. Système de transport selon l'une des revendications précédentes, **caractérisé en ce qu'**un dispositif de freinage (28) est disposé pour le porte-produits (6) au moins dans la zone de postes de travail, le long de la voie de roulement (2), en particulier sur celle-ci.

23. Système de transport selon l'une des revendications 14, 15, 16, 17 ou 19 précédentes, **caractérisé en ce que** la voie de roulement de véhicule (21) comporte au moins un tronçon de retour pour le retour en un emplacement de retour de véhicule (20) désaccouplé de la plaque de base (7).
